# EUROPÄISCHE PATENTSCHRIFT

(11) **EP 2 842 701 B1**
(45) Veröffentlichungstag und Bekanntmachung des Hinweises auf die Patenterteilung: **13.12.2017**
(21) Anmeldenummer: 14002486.0
(22) Anmeldetag: 17.07.2014
(51) Int. Cl.: B26D 3/16, B23B 5/16, B25H 1/00, B26D 3/10

(54) **Schälvorrichtung**
Peeling device
Dispositif d'épluchage

(30) Priorität: 29.07.2013 DE 102013012439; 29.07.2013 DE 202013011398 U
(43) Veröffentlichungstag der Anmeldung: 04.03.2015
(73) Patentinhaber: Stang GmbH, 46562 Voerde (DE)
(72) Erfinder: Josten, Ulrich, DE-46562 Voerde (DE)
(74) Vertreter: Demski, Siegfried

(56) Entgegenhaltungen:
- AU-A1- 2009 210 370
- DE-A1- 10 326 718
- DE-A1- 19 814 419
- FR-A1- 2 688 051
- FR-A1- 2 765 821
- US-A- 1 841 550
- US-A1- 2012 102 753
- Henze Gmbh: "bi UmweltBau 1 | 11", , 31. Januar 2011 (2011-01-31), Seiten 61-61, XP055182612, Gefunden im Internet: URL:http://www.skrv.de/BI-Umweltbau_Innova tives Stutzenschweißsystem.pdf [gefunden am 2015-04-13]
- skrvde: "Stutzenschweißgerät DA160 für Hausanschlüsse an Abwasserkanäle", , 25. Februar 2011 (2011-02-25), XP054975817, Gefunden im Internet: URL:https://www.youtube.com/watch?v=RvY6tX J3sSE [gefunden am 2015-04-14]

## Beschreibung

Die Erfindung betrifft eine Schälvorrichtung gemäß dem Oberbegriff des Anspruchs 1 für das Abschälen einer Stirnfläche eines in ein Rohr eingesetzten Rohrstutzens, umfassend eine Zentriervorrichtung und ein Schälwerkzeug, wobei das Schälwerkzeug zumindest ein Führungselement, das sich durch die Zentriervorrichtung erstreckt und beweglich von dieser aufgenommen ist. Die Erfindung betrifft auch ein Schälwerkzeug gemäß dem Oberbegriff des Anspruchs 8 zur Abschälung der Stirnfläche. Die Erfindung betrifft auch ein Verfahren gemäß dem Oberbegriff des Anspruchs 14. Rohrleitungen für verschiedene Anwendungen bestehen aus Kunststoffrohren, wobei es sich bei den Kunststoffrohren häufig um Rohre aus Polyethylen oder Polypropylen handelt. Bei der erstmaligen Verlegung von Rohrleitungen werden Verzweigungen durch entsprechende Verbindungsstücke wie zum Beispiel ein Y-Verbindungsstück realisiert. Soll jedoch eine Verzweigung beziehungsweise eine Abzweigung einer bereits verlegten Rohrleitung realisiert werden, wird die Rohrleitung mit einem Durchbruch versehen und sodann ein Rohrstutzen in den ausgebildeten Durchbruch gesteckt. Der Rohrstutzen wird anschließend mit der Rohrleitung verschweißt, sodass eine fluiddichte Verbindung der Rohrleitung mit dem Rohrstutzen ausgebildet wird. Mit dem Rohrstutzen kann dann der abzweigende Rohrleitungsabschnitt verschweißt werden. Beim Verschweißen des Rohrstutzens mit der Rohrleitung ragt der Rohrstutzen in die Rohrleitung hinein, woraufhin die in die Rohrleitung hineinragende Stirnfläche mit einem Schälwerkzeug abgeschält wird, sodass die Rohrleitungsinnenfläche mit der abgeschälten Stirnfläche des Rohrstutzens fluchtet. Hierzu bedient man sich eines Schälwerkzeuges, dass die in die Rohrleitung hineinragende Stirnfläche des Rohrstutzens abschält, wobei das Schälwerkzeug eine Klinge aufweist, die gegen die Stimfläche des Rohrstutzens gepresst wird und diese durch Bewegung der Klinge über die Stirnfläche des Rohrstutzens abschält. Dabei wird in dem Rohrstutzen zunächst eine Zentriervorrichtung angeordnet, welche das Schälwerkzeug aufnimmt. Durch Drehung des Schälwerkzeuges in der Zentriervorrichtung erfolgt die Abschälung der Stirnfläche des Rohrstutzens.

Der Abschälvorgang der Stirnfläche ist in der Handhabung jedoch schwierig und es besteht darüber hinaus die Gefahr, dass zu viel Material abgeschält wird. Sollte zu viel Material abgeschält werden, könnte die Wandstärke der Rohrleitung im Bereich des Rohrstutzens unzulässigerweise verringert werden. Sollte hingegen zu wenig Material abgeschält werden, bleibt zu viel Material des Rohrstutzens stehen, wodurch der Querschnitt der Rohrleitung verringert wird. Die Position der Klinge im Rohrleitungsinneren ist nicht bekannt und man muss das Schälwerkzeug ausbauen, um zu prüfen ob genügend abgeschält worden ist.

Aus dem Stand der Technik ist bekannt, dass man die nötige Anzahl an Vorspannumdrehungen des Schälwerkzeuges ausgehend von der Länge des in die Rohrleitung hineinragenden Abschnittes des Rohrstutzens und der Steigung der Gewindespindel berechnet, sodass weder zu viel noch zu wenig Material von der Stirnfläche des Rohrstutzens abgeschält wird. Die aktuelle Position der Klinge wird jedoch nicht angezeigt, sodass die Berechnung hinfällig werden kann, wenn Probleme während des Abschälvorgangs austreten. Ein solches Problem kann beispielsweise darin bestehen, dass der Span sich unter die Klinge setzt, woraufhin das Schälwerkzeug ausgebaut und erneut eingesetzt werden muss. Beim erneuten Einsetzen ist Jedoch nicht bekannt, wie viel Material noch abgeschält werden muss, das heißt wie viele Umdrehungen das Schälwerkzeug noch vollziehen muss. Man behilft sich dann häufig damit, dass man sich an den In die Rohrleitung hineinragenden Abschnitt des Rohrstutzens herantastet und fühlt, wie lang dieser noch ist, um dann das Schälwerkzeug neu anzusetzen. Diese Vorgehensweise ist jedoch zeitaufwändig, da häufig mehrmals die Länge des in die Rohrleitung hineinragenden Abschnittes mithilfe des Tastsinnes ermittelt werden muss und darüber hinaus ist diese Vorgehensweise sehr ungenau, sodass die Gefahr einer zu großen Materialabschälung besteht. Dadurch wird die Wandungsdicke der Rohrleitung in dem den Rohrstutzen umgebenden Bereich unerwünschterweise verringert.

Die geschilderte Schälvorrichtung wird insbesondere bei der Ausbildung von Abzweigungen von Abwasserkanälen aus Polyethylen oder Polypropylen verwendet.

Aus der DE 103 26 718 A1 ist eine Vorrichtung zur Abschälen eines ummantelten Leitungsrohres bekannt, welches eine Fassung für ein Leitungsrohr und einen mit dieser verbundenes, drehbar gelagertes Schälwerkzeug umfasst.

Aus der US 1,841,550 A ist eine Vorrichtung zur Ausbildung von geneigten Aus- oder Innenflächen eines Rohres bekannt, wodurch mehrere Rohre ineinander steckbar sind.

Aus der US-Anmeldung 2012/102753 A1 ist ein Schneidwerkzeug zum Schneiden von Rohren bekannt, wobei das Schneidwerkzeug eine längliche Hülse und ein sich senkrecht von der Hülse erstreckendes Sägeblatt aufweist. Das Schneidwerkzeug wird in ein zu schneidendes Rohr eingeschoben und in Rotation versetzt, damit das Rohrende abgetrennt werden kann. Die Tiefe des Sägeblattes kann hierbei über eine Skala während des Einschiebens in das Rohrende festgelegt werden.

Aus der FR 2 688 051 A1 ist eine Vorrichtung bekannt, mit der ein in ein Rohr eingesetzten Rohrstutzen bearbeitet wird. Die Aufgabe der vorliegenden Erfindung besteht darin, eine Schälvorrichtung für Rohrstutzen zu verbessern, mit welcher zuverlässig und einfach genau so viel Material von einem Rohrstutzen kontrolliert abgeschält werden kann, wie gewünscht.

Zur Lösung der Aufgabe ist eine Schälvorrichtung nach dem Anspruch 1, ein Schälwerkzeug gemäß dem Anspruch 8 und ein Verfahren gemäß dem Anspruch 14 vorgesehen. Bei diesen Lösungen wird vorgesehen, dass das Führungselement eine erste Skala aufweist, mittels welcher die axiale Position des Schälwerkzeuges bezüglich der Zentriervorrichtung ablesbar ist, und/oder dass das Schälwerkzeug einen Anschlag und die Zentriervorrichtung eine Anschlagfläche aufweist, wobei der Anschlag an dem Führungselement befestigbar und positionsverstellbar ausgebildet ist, und wobei das Führungselement des Schälwerkzeuges ferner eine zweite Skala aufweist, mittels welcher eine Befestigungsposition des Anschlages an dem Führungselement nach Maß einstellbar ist. Weitere vorteilhafte Ausgestaltungen der Erfindung ergeben sich aus den Unteransprüchen.

Durch die erfindungsgemäße Ausgestaltung einer Schälvorrichtung mit einer ersten Skala ist es erstmalig möglich, den Schälweg in Axialrichtung des Rohrstutzens während des Schälvorganges abzulesen. Durch die erste Skala, welche an dem dem Bearbeitungskopf abgewandten Bereich des Führungselementes angeordnet ist, kann die axiale Position des Schälwerkzeuges bezüglich der Zentriervorrichtung während des Schälvorgangs abgelesen werden, sodass der bereits zurückgelegte Schälweg in Axialrichtung des Rohrstutzens und der noch zurückzulegende Schälweg während des Schälvorgangs jederzeit bekannt sind.

Durch die erfindungsgemäße Ausgestaltung einer Schälvorrichtung ist es ferner erstmalig möglich, den Schälweg in Axialrichtung des Rohrstutzens vor Beginn des Schälvorgangs einzustellen, sodass weder zu viel noch zu wenig Material von einer Stirnfläche eines Rohrstutzens abgeschält wird. Dabei kann der Anschlag an dem Führungselement entsprechend der Wanddicke der Rohrleitung befestigt werden. Daraufhin wird das Schälwerkzeug in den Durchbruch der Rohrleitung eingeführt, die Zentrierungsvorrichtung auf das Schälwerkzeug aufgesteckt, sodass dieses von der Zentriervorrichtung aufgenommen und in dem Rohrstutzen angeordnet ist. Zur Durchführung des Schälvorganges wird das Schälwerkzeug in Drehung versetzt, wodurch die Stirnfläche des Rohrstutzens abgeschält wird. Das Führungselement des Schälwerkzeuges weist ein Gewinde auf, welches mit einem an die Zentriervorrichtung angeformten Mitnehmer in Eingriff steht, sodass eine Drehung des Schälwerkzeuges in eine Bewegung desselben in Axialrichtung des Rohrstutzens überführt wird. In diesem Fall ist das Führungselement als Gewindespindel ausgebildet. Alternativ kann die Zentriervorrichtung ein Gewinde aufweisen, welches mit einem an das Führungselement angeformten Mitnehmer in Eingriff steht, sodass ebenfalls eine Drehung des Schälwerkzeuges in eine Bewegung desselben in Axialrichtung des Rohrstutzens überführt wird.

Die erfindungsgemäße Schälvorrichtung weist den besonderen Vorteil auf, dass die Drehung des Schälwerkzeuges solange erfolgen kann, bis der an dem Führungselement befestigte Anschlag eine weitere Drehung verhindert, wobei der an dem Führungselement befestigte Anschlag mit der Anschlagfläche der Zentriervorrichtung zur Anlage gelangt. Bei Berührung des Anschlages und der Anschlagfläche der Zentriervorrichtung ist gerade so viel Material von der Stirnfläche des Rohrstutzens abgeschält worden, wie gewünscht. Auch ein Ausbau und ein Wiedereinbau der Schälvorrichtung aufgrund etwaiger Komplikationen bei dem Schälvorgang ist jederzeit möglich, ohne dass der dann noch gewünschte Schälweg des Schälwerkzeuges in Axialrichtung des Rohrstutzens neu ermittelt oder geschätzt werden muss. Zudem entfällt die komplizierte Berechnung der Vorspannumdrehungen. Aus diesen Gründen vereinfacht die erfindungsgemäße Schälvorrichtung den Schälvorgang erheblich, weswegen die Installation eines solchen Rohrstutzens an einer Rohrleitung deutlich weniger Zeit in Anspruch nimmt und darum kostengünstiger durchführbar ist.

In weiterer Ausgestaltungen der Erfindung kann vorgesehen sein, dass das Führungselement des Schälwerkzeuges eine zweite Skala aufweist, mittels welcher eine Befestigungsposition des Anschlages an dem Führungselement nach Maß einstellbar ist. In dieser Ausgestaltung der Schälvorrichtung ist an dem dem Bearbeitungskopf zugewandten Bereich des Führungselementes eine Skala angeordnet, sodass der Anschlag mithilfe der Skala an der gewünschten Position des Führungselementes befestigt werden kann, ohne dass es dazu eines weiteren Messhilfsmittels bedarf. Die zweite Skala vereinfacht die Durchführung des Schälvorganges weiterhin, sodass der Schälvorgang einfacher und schneller durchführbar ist.

Bevorzugt weist der Bearbeitungskopf zumindest eine Klinge auf. Die Klinge kann mit dem Führungselement annähernd einen rechten Winkel einschließen, sodass die abgeschälte Stirnfläche mit der Axialrichtung des Rohrstutzens einen rechten Winkel einschließt und mit der Innenfläche der Rohrleitung fluchtet. Es ist jedoch auch denkbar, dass die zumindest eine Klinge des Bearbeitungskopfes mit dem Führungselement einen Winkel von ungleich 90 Grad einschließt, sodass die abgeschälte Stirnfläche einen sich konisch zuspitzenden Verlauf aufweist. Weiterhin ist der Bearbeitungskopf bevorzugt über ein Gelenk mit dem Führungselement verbunden und weist eine Feder auf, welche den Bearbeitungskopf gegen die abzuschälende Stirnfläche des Rohrstutzens drückt. Durch das Gelenk ist der Bearbeitungskopf mit dem Führungselement schwenkbar verbunden und die Feder drückt den Bearbeitungskopf gegen die abzuschälende Stirnfläche. Durch den schwenkbaren mit der Feder zusammen wirkenden Bearbeitungskopf wird hierbei verhindert, dass die Klinge des Bearbeitungskopfes mit einem zu großen Schälwinkel in die Stirnfläche schneidet, was zu einem Blockieren der weiteren Drehung des Schälwerkzeuges führen kann, da das Gewinde des Führungselementes beziehungsweise das Gewinde der Zentriervorrichtung, welche mit dem Mitnehmer zusammenwirken, eine fest vorgegebene Steigung aufweisen.

In besonders bevorzugter Ausgestaltung weist die erfindungsgemäße Schälvorrichtung eine Schnellspannmutter, welche drehbar mit der Zentriervorrichtung verbunden ist, und einen Mitnehmer, welcher eine Drehung der Schnellspannmutter an eine Bewegung des Schälwerkzeuges in Axialrichtung des Führungselementes überführt, auf. In dieser Ausgestaltung weist die Zentriervorrichtung eine Schnellspannmutter auf, welche drehbar mit derselben verbunden ist. An der Schnellspannmutter ist ferner ein Mitnehmer befestigt, beispielsweise angeformt, welcher mit dem Gewinde des Führungselementes des Schälwerkzeuges zusammenwirkt, sodass eine Drehung der Schnellspannmutter zu einer Bewegung des Schälwerkzeuges in die Axialrichtung des Rohrstutzens überführt wird. Dabei wird die Zentriervorrichtung als Ganzes nicht in dem Rohrstutzen gedreht sondern lediglich die Schnellspannmutter, welche in einem entsprechenden Lager geführt sein kann, sodass die Drehung der Schnellspannmutter ohne viel Kraftaufwand erfolgen kann. Alternativ kann vorgesehen sein, dass die dem Führungselement zugewandte Oberfläche der Schnellspannmutter ein Gewinde aufweist und an dem Führungselement ein Mitnehmer befestigt, beispielsweise angeformt, ist. An der Schnellspannmutter können ferner ein oder mehrere, vorzugsweise zwei Hebel angeordnet sein, welche bezüglich der Axialrichtung des Führungselementes eine radiale Erstreckung aufweisen, sodass die Drehung der Schnellspannmutter durch die Hebelwirkung noch einfacher durchführbar ist.

In besonderer Ausgestaltung weist das Schälwerkzeug der erfindungsgemäßen Schälvorrichtung eine Anzeigeeinrichtung auf, die das Erreichen zumindest einer bevorzugten Winkelstellung der Klinge bezüglich des Führungselementes anzeigt. Mittels der Anzeigevorrichtung kann ein Anwender der Schälvorrichtung erkennen ob die Abschälung der Stirnfläche des Rohrstutzens soweit fortgeschritten ist, wie gewünscht. Bei der Anzeigeeinrichtung kann es sich um eine mechanische Vorrichtung handeln, welche an oder in dem Schälwerkzeug angeordnet ist. Die Anzeigeeinrichtung kann jedoch auch aus Tast- oder Drucksensoren und einem digitalen oder analogen Anzeigeelement bestehen, das das Erreichen zumindest einer bevorzugten Winkelstellung der Klinge durch einen Zeigerausschlag oder die Darstellung einer Zahl oder eines Symbols anzeigt.

Bei der bevorzugten Winkelstellung der Klinge kann es sich um die Winkelstellung handeln, bei der die Klinge mit dem Führungselement einen Winkel von 90 Grad einschließt. Das Erreichen der 90-Grad-Winkelstellung der Klinge bezüglich des Führungselementes zeigt einem Anwender der Schälvorrichtung an ob die Stirnfläche des Rohrstutzens soweit abgeschält ist, dass sie mit der Innenfläche der Rohrleitung fluchtet.

Die Anzeigeeinrichtung kann einen Übertagungsstab, welcher in dem Führungselement beweglich angeordnet ist und von einer ersten Position zumindest in eine zweite Position reversibel überführbar ist, und einen Bolzen, welcher in dem Führungselement beweglich angeordnet ist und mit dem Übertragungsstab zusammenwirkt, aufweisen, wobei der Bolzen den Übertragungsstab zumindest in der zweiten Position arretiert, welche Arretierung durch Kontakt des Bolzens mit dem Bearbeitungskopf lösbar ist, und wobei der Übertragungsstab mit einem ersten Rückstellelement zusammenwirkt, welches den Übertragungsstab nach Lösen der Arretierung in die erste Position oder eine weitere Position bewegt und der Bolzen mit einem zweiten Rückstellelement zusammenwirkt, welches den Bolzen in eine von dem Übertragungsstab wegweisende Richtung drückt. Bei dieser Ausgestaltung der Anzeigeeinrichtung handelt es sich um eine rein mechanische Vorrichtung, welche jedoch aus wenigen Teilen besteht und somit kostengünstig in die Schälvorrichtung integriert werden kann und kaum fehleranfällig ist. Das erste Rückstellelement bewirkt eine selbsttätige Rückkehr des Übertragungsstabes von der ersten Position in die zweite Position oder eine weitere Position, nachdem die Arretierung des Übertagungsstabes in der zweiten Position gelöst ist. Das zweite Rückstellelement drückt den Bolzen in eine von dem Übertragungsstab wegweisende Richtung, sodass eine zuverlässige Arretierung des Übertragungsstabes in der zweiten Position gegeben ist. Ferner kehrt der Bolzen vermöge des zweiten Rückstellelementes selbsttätig in seine Ausgangsposition vor Kontaktierung mit dem Bearbeitungskopf zurück. Es kann auch vorgesehen sein, dass der Bolzen den Übertragungsstab in einer dritten Position zwischen der ersten Position und der zweiten Position arretiert, sodass der Übertragungsstab bei Erreichen einer bevorzugten Winkelstellung der Klinge bezüglich des Führungselementes, beispielsweise der 90°-Winkelstellung, zunächst in die dritte Position bewegt wird und erst in die erste Position bewegt wird, wenn die Klinge eine noch geringere Winkelstellung erreicht. In dieser Ausgestaltung wird der Übertragungsstab in mehreren Stufen entriegelt, wodurch mehrere Winkelstellungen der Klinge signalisiert werden können.

Sowohl das erste Rückstellelement als auch das zweite Rückstellelement können als jeweils eine Feder ausgebildet sein. Bei einer Feder handelt es sich um eine günstige und zuverlässige Ausgestaltung des ersten Rückstellelementes oder des zweiten Rückstellelementes, sodass die Anzeigeeinrichtung kostengünstig realisiert werden kann. Es kann auch vorgesehen sein, dass es sich bei dem ersten Rückstellelement oder bei dem zweiten Rückstellelement um Magnetelemente handelt, die aufgrund der magnetischen Anziehungskraft zwischen zwei Magneten oder zwischen einem Magneten und einem in einem Magnetfeld magnetisierten Material eine Rückstellkraft ausüben.

In besonderer Ausgestaltung der erfindungsgemäßen Schälvorrichtung kann an dem dem Bearbeitungskopf zugewandten Ende des Übertragungsstabes ein Rückhalteriegel befestigt sein, der eine Vertiefung an seiner Außenfläche aufweist, in welche ein mit dem Bolzen verbundenes Rückhaltelement eingreift, wenn sich der Übertragungsstab in der zweiten Position befindet, sodass der Übertragungsstab in der zweiten Position arretierbar ist. Diese spezielle Ausführung des Arretiermechanismus ist besonders zuverlässig und kann, was stets ein entscheidender Aspekt ist, kostengünstig realisiert werden, da er aus einer geringen Anzahl an Teilen besteht. Dabei wird das Rückhaltelement durch die Rückstellkraft des zweiten Rückstellelementes in die Vertiefung des Rückhalteriegels gedrückt, sodass die Arretierung nicht ungewollt, beispielsweise durch eine Erschütterung, gelöst wird. Gelangt der Bearbeitungskopf in Kontakt mit dem Bolzen, wird dieser in Richtung des Übertragungsstabes bewegt, wodurch das Rückhalteelement aus der Vertiefung bewegt und die Arretierung des Übertragungsstabes in der zweiten Position gelöst wird, woraufhin sich der Übertragungsstab durch die Rückstellkraft des ersten Rückstellelementes in die erste Position bewegt. Sobald der Bearbeitungskopf aus der bevorzugten Winkelstellung in Richtung einer größeren Winkelstellung verschwenkt wird, kehrt der Bolzen durch die Rückstellkraft des zweiten Rückstellelementes wieder in seine Ausgangsposition zurück, die allerdings nicht zu einer erneuten Arretierung des Übertragungsstabes führt, da sich dieser bereits in die erste Position bewegt hat.

Es kann vorgesehen sein, dass ein Abschnitt des Übertragungsstabes durch eine Ausnehmung in dem Führungselement zumindest in der ersten Position des Übertragungsstabes aus dem Führungselement herausragt, sodass der Übertragungsstab mittels des Abschnittes von der ersten Position in die zweite Position per Hand überführbar ist. In dieser Ausgestaltung ragt ein Abschnitt des Übertragungsstabes durch eine Ausnehmung in dem Führungselement aus diesem heraus, sodass für einen Anwender die momentane Position des Übertragungsstabes unmittelbar erkennbar ist. Weiterhin kann der Übertragungsstab über den Abschnitt manuell von der ersten Position in die zweite Position überführt werden. Der Abschnitt kann seitlich aus dem Führungselement oder aus der dem Anwender zugewandten Stirnfläche des Führungselements ragen. Dabei kann der Abschnitt als an dem Übertragungsstab befestigter Pin ausgebildet sein, der auch mit einer farblichen Markierung versehen sein kann.

Die aus dem Stand der Technik bekannte Schälvorrichtung umfasst ebenfalls ein Schälwerkzeug und eine Zentriervorrichtung, wobei jedoch das Schälwerkzeug keinen Anschlag aufweist, woraus sich die oben geschilderten Nachteile ergeben. Das Schälwerkzeug der erfindungsgemäßen Schälvorrichtung kann in der Zentriervorrichtung der aus dem Stand der Technik bekannten Schälvorrichtung eingesetzt werden, sodass es möglich ist, eine solche Schälvorrichtung mit dem Schälwerkzeug gemäß der Erfindung auszustatten. Demnach ist es möglich, das Schälwerkzeug gemäß der Erfindung mit einer aus dem Stand der Technik bekannten Zentriervorrichtung zu kombinieren. Dies weist den Vorteil auf, dass eine bereits bestehende Schälvorrichtung mit dem Schälwerkzeug gemäß der Erfindung nachgerüstet werden kann, wobei die Anschaffungskosten für das Schälwerkzeug gemäß der Erfindung geringer sind als die Anschaffungskosten der gesamten erfindungsgemäßen Schälvorrichtung.

Das Schälwerkzeug gemäß der Erfindung zur Abschälung einer Stirnfläche eines in ein Rohr eingesetzten Rohrstutzens ist in Anspruch 8 definiert.

Der Bearbeitungskopf des Schälwerkzeuges weist bevorzugt zumindest eine Klinge auf. Die Klinge kann mit dem Führungselement annähernd einen rechten Winkel einschließen. Der Bearbeitungskopf ist jedoch bevorzugt über ein Gelenk mit dem Führungselement verbunden und weist eine Feder auf, welche den Bearbeitungskopf gegen die abzuschälende Stirnfläche eines Rohrstutzens drückt. Das Schälwerkzeug kann ferner eine Anzeigeeinrichtung aufweisen, die das erreichen zumindest einer bevorzugten Winkelstellung der Klinge bezüglich des Führungselementes anzeigt. Bei der bevorzugten Winkelstellung der Klinge kann es sich um die Winkelstellung handeln, bei der die Klinge mit dem Führungselement einen Winkel von 90 Grad einschließt. In besonderer Ausgestaltung, weist die Anzeigeeinrichtung einen Übertragungsstab, welcher in dem Führungselement beweglich angeordnet ist und von einer ersten Position zumindest in eine zweite Position reversibel überführbar ist, und einen Bolzen, welcher in dem Führungselement beweglich angeordnet ist und mit dem Übertragungsstab zusammenwirkt, auf, wobei der Bolzen den Übertragungsstab zumindest in der zweiten Position arretiert, welche Arretierung durch Kontakt des Bolzens mit dem Bearbeitungskopf lösbar ist, und wobei der Übertragungsstab mit einem ersten Rückstellelement zusammenwirkt, welches den Übertragungsstab nach Lösen der Arretierung in die erste Position oder eine weitere Position bewegt und der Bolzen mit einem zweiten Rückstellelement zusammenwirkt, welches den Bolzen in eine von dem Übertragungsstab wegweisende Richtung drückt. Sowohl bei dem ersten Rückstellelement als auch bei dem zweiten Rückstellelement kann es sich um jeweils eine Feder handeln. Es kann auch vorgesehen sein, dass es sich bei dem ersten Rückstellelement oder bei dem zweiten Rückstellelement um Magnetelemente handelt, die aufgrund der magnetischen Anziehungskraft zwischen zwei Magneten oder zwischen einem Magneten und einem in einem Magnetfeld magnetisierten Material eine Rückstellkraft ausüben. In einer besonderen Ausgestaltung des erfindungsgemäßen Schälwerkzeuges ist an dem dem Bearbeitungskopf zugewandten Ende des Übertragungsstabes ein Rückhalteriegel befestigt, der eine Vertiefung an seiner Außenfläche aufweist, in welche ein mit dem Bolzen verbundenes Rückhalteelement eingreift, wenn sich der Übertragungsstab in der zweiten Position befindet. Das Schälwerkzeug kann derart ausgebildet sein, dass ein Abschnitt des Übertragungsstabes durch eine Ausnehmung in dem Führungselement zumindest in der ersten Position des Übertragungsstabes aus dem Führungselement herausragt, sodass der Übertragungsstab mittels des Abschnittes von der ersten Position in die zweite Position per Hand überführbar ist. Der Abschnitt kann dabei als ein an dem Übertragungsstab befestigter Pin ausgebildet sein, der auch mit einer farblichen Markierung versehen sein kann.

Die Erfindung betrifft ferner ein Verfahren zur Abschälung einer Stirnfläche eines in ein Rohr eingesetzten Rohrstutzens, wobei ein Schälwerkzeug in Axialrichtung des Rohrstutzens bewegt und dabei die Stirnfläche abgeschält wird. Das Verfahren ist durch die Merkmale des Anspruchs 14 definiert. Mittels des Verfahrens ist es möglich, den Schälweg eines Schälwerkzeuges in Axialrichtung des Rohrstutzens vor Beginn des Schälvorganges vorzugeben, sodass gerade so viel Material von der Stirnfläche des Rohrstutzens abgeschält wird, wie gewünscht. Darüber hinaus kann das Schälwerkzeug vor Beendigung des Schälvorganges ausgebaut und wieder eingebaut werden, beispielsweise aufgrund von eintretenden Komplikationen, ohne dass eine erneute Bestimmung des noch verbleibenden Schälweges erforderlich ist.

Bevorzugt wird der Endpunkt hierbei so gewählt, dass die abgeschälte Stirnfläche des Rohrstutzens mit der Innenfläche des Rohres fluchtet.

Die Erfindung wird im Nachfolgenden anhand der Figuren nochmals erläutert. Es zeigen
- Fig. 1: einen ersten Längsschnitt einer ersten Ausführungsform der erfindungsgemäßen Schälvorrichtung,
- Fig. 2: einen zweiten Längsschnitt der ersten Ausführungsform bei einer ersten Arbeitsstellung des Bearbeitungskopfes,
- Fig. 3: einen vergrößerten Ausschnitt des Figur 2,
- Fig. 4: den zweiten Längsschnitt der ersten Ausführungsform bei einer zweiten Arbeitsstellung des Bearbeitungskopfes,
- Fig. 5: einen vergrößerten Ausschnitt der Figur 4 und
- Fig. 6: eine Draufsicht auf die erste Ausführungsform des erfindungsgemäße Schälwerkzeug.

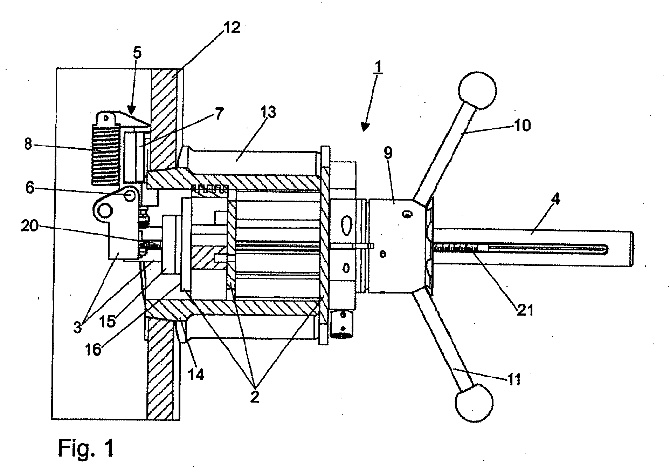

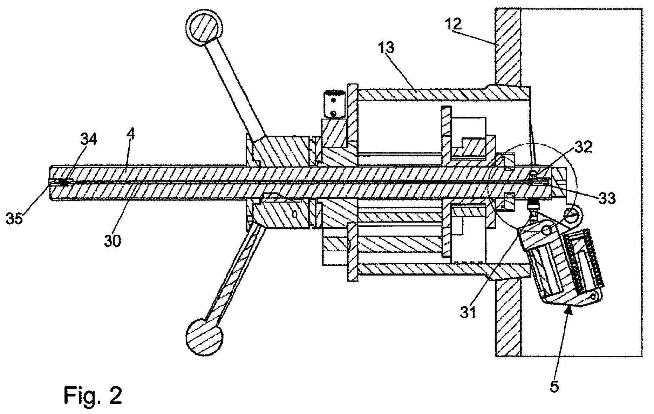

Figur 1 zeigt einen ersten Längsschnitt einer ersten Ausführungsform der erfindungsgemäßen Schälvorrichtung 1, umfassend eine Zentriervorrichtung 2 und ein Schälwerkzeug 3. Das Schälwerkzeug 3 weist ein Führungselement 4 und einen Bearbeitungskopf 5 auf, wobei der Bearbeitungskopf 5 mit dem Führungselement 4 über ein Gelenk 6 verbunden ist. Der Bearbeitungskopf 5 weist eine Klinge 7 auf, welche die Stirnfläche des Rohrstutzens 13 bei Drehung des Schälwerkzeuges 3 abschält. Der Bearbeitungskopf 5 wird durch eine Feder 8 gegen die Stirnfläche des Rohrstutzens 13 gedrückt. Die Zentriervorrichtung 2 weist weiterhin eine Schnellspannmutter 9 auf, an welcher Hebel 10, 11 angeordnet sind, mit deren Hilfe die Drehung der Schnellspannmutter 9 vereinfacht wird. Die Schnellspannmutter 9 ist dazu drehbar mit der Zentriervorrichtung 2 verbunden, sodass nicht etwa die gesamte Zentriervorrichtung 2, sondern lediglich die Schnellspannmutter 9 gedreht wird. Die Schnellspannmutter 9 weist ferner einen Mitnehmer auf, welcher mit einem an der Oberfläche des Führungselementes 4 ausgebildeten Gewinde zusammenwirkt, sodass eine Drehung der Schnellspannmutter 9 in eine Bewegung des Schälwerkzeuges 3 in Axialrichtung des Rohrstutzens überführt wird. Alternativ kann an der Oberfläche des Führungselementes des Schälwerkzeuges ein Mitnehmer befestigt sein, welcher mit einem an der Schnellspannmutter 9 ausgebildeten Gewinde zusammenwirkt.

Zur Durchführung des Schälvorganges wird zunächst ein Durchbruch in eine Rohrleitung 12 gefräst und anschließend ein Rohrstutzen 13 in den Durchbruch eingeführt. Der Rohrstutzen 13 wird sodann mit der Rohrleitung 12 verschweißt, wobei jedoch ein Abschnitt des Rohrstutzens 13 in die Rohrleitung 12 hineinragt. Der Rohrstutzen 13 weist einen konisch ausgebildeten Bereich 14 auf, mit dessen Hilfe der Anpressdruck des Rohrstutzens 13 an die Rohrleitung 12 eingestellt werden kann. Je weiter der Rohrstutzen 13 in den Durchbruch in der Rohrleitung 12 geschoben wird, desto größer ist der Anpressdruck zwischen dem Rohrstutzen 13 und der Rohrleitung 12. Für die Erzeugung einer einwandfreien Schweißnaht zwischen den Rohrstutzen 13 und der Rohrleitung 12 ist ein gewisser Anpressdruck nötig, welcher mithilfe des konischen Bereiches 14 des Rohrstutzens 13 einstellbar ist. Aus diesem Grunde wird ein Abschnitt des Rohrstutzens in den meisten Fällen in das Innere der Rohrleitung 12 hineinragen.

Das besondere an der erfindungsgemäßen Schälvorrichtung 1 ist der an dem Führungselement 4 befestigbare und positionsverstellbar ausgebildete Anschlag 15, welcher bei Erreichen der Endposition des Schälwerkzeuges 3 mit einer Anschlagfläche 16 der Zentriervorrichtung 2 zur Anlage gelangt, sodass genau so viel Material von der Stirnfläche des Rohrstutzens 13 abgeschält wird, wie gewünscht.

Wenn der Anschlag 15 des Schälwerkzeuges 3 mit der Anschlagfläche 16 der Zentriervorrichtung 2 zur Anlage kommt, ist eine weitere Bewegung des Schälwerkzeuges 3 ausgeschlossen. Das Führungselement 4 des Schälwerkzeuges 3 dieser Ausführungsform weist eine zweite Skala 20 und eine erste Skala 21 auf. Mithilfe der zweiten Skala 20 kann die Position des Anschlages 15 an dem Führungselement 4 nach Maß eingestellt werden, ohne dass es weitere Messhilfsmittel bedarf. Mithilfe der ersten Skala 21 kann die Wanddicke der Rohrleitung 12 eingestellt werden, unabhängig davon, wie weit der Rohrstutzen 13 noch in die Rohrleitung 12 hineinragt.

Figur 2 zeigt einen zweiten Längsschnitt der ersten Ausführungsform der erfindungsgemäßen Schälvorrichtung 1 bei einer ersten Arbeitsstellung des Bearbeitungskopfes 5. In der Darstellung der Figur 2 ist die Stirnfläche des Rohrstutzens 13 noch nicht so weit abgeschält, dass sie mit der Innenfläche der Rohrleitung 12 fluchtet. Entsprechend ist der Winkel zwischen der Klinge 7 und dem Führungselement 4 des Schälwerkzeuges 3 größer als 90 Grad. In dem Führungselement 4 ist ein Übertragungsstab 30 beweglich angeordnet, wobei der Übertragungsstab 30 zwischen einer ersten Position und einer zweiten Position überführbar ist. Der Übertragungsstab 30 wirkt mit einem in dem Führungselement 4 beweglich angeordneten Bolzen 31 derart zusammen, dass ein mit dem Bolzen 31 verbundenes Rückhalteelement 32 den Übertragungsstab 30 in der zweiten Position arretiert. Dazu ist an dem dem Bearbeitungskopf 5 zugewandten Ende des Übertragungsstabes 30 ein Rückhalteriegel 33 befestigt, welcher an seiner Außenfläche eine Vertiefung aufweist. Das Rückhalteelement 32 ist in der zweiten Position des Übertragungsstabes 30 in dieser Vertiefung angeordnet, sodass eine Arretierung des Übertragungsstabes 30 in der zweiten Position gegeben ist. Bei Fortschreiten des Schälvorganges wird der Winkel zwischen der Klinge 7 des Bearbeitungskopfes 5 und dem Führungselement 4 kleiner, wobei der Bearbeitungskopf 5 bei Erreichen der 90°-Winkelstellung der Klinge 7 bezüglich des Führungselementes 4 mit der Stirnfläche des Bolzens 31 in Kontakt gelangt. Dies hat zur Folge, dass der Bolzen 31 geringfügig in Richtung des Übertragungsstabes 30 verschoben wird, wodurch die Arretierung des Übertragungsstabes 30 in der zweiten Position gelöst wird. Daraufhin bewegt sich der Übertragungsstab 30 von der zweiten Position in die erste Position. Die Bewegung des Übertragungsstabes 30 von der zweiten Position in die erste Position wird durch eine mit dem Übertragungsstab 30 verbundene Feder 34 bewirkt. Ein Abschnitt 35 des Übertragungsstabes 30, welcher vorzugsweise als Pin ausgebildet ist, ragt in der ersten Position des Übertragungsstabes 30 aus der dem Anwender zugewandten Stirnfläche des Führungselementes 4 heraus. Entsprechend kann ein Anwender den Übertragungsstab 30 von einer ersten Position in die zweite Position durch Reindrücken des Abschnittes 35 in das Führungselement 4 bewirken. Wenn die Klinge 7 des Bearbeitungskopfes 5 gegenüber dem Führungselement 4 bei dem Schälvorgang die 90°-Winkelstellung erreicht hat, was zu einem Lösen der Arretierung des Übertragungsstabes 30 in der zweiten Position und zu einer Bewegung des Übertragungsstabes 30 von der zweiten Position in die erste Position oder eine weitere Position führt, ragt der Abschnitt 35 wieder aus dem Führungselement 4 heraus, woran ein Anwender unmittelbar das Erreichen der 90°-Winkelstellung der Klinge 7 des Bearbeitungskopfes 5 erkennen kann.

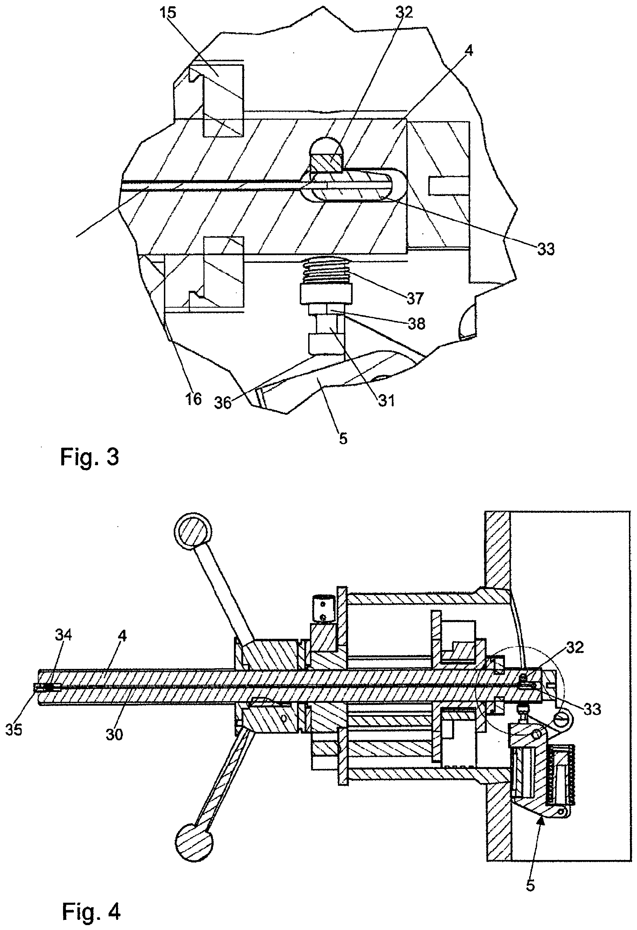

Figur 3 zeigt einen vergrößerten Ausschnitt des in der Figur 2 dargestellten Längsschnittes der ersten Ausführungsform der erfindungsgemäßen Schälvorrichtung 1. Der in der Figur 3 dargestellte vergrößerte Ausschnitt ist in der Figur 2 von einem Kreis umgeben. An dem dem Bearbeitungskopf 5 zugewandten Ende des Übertragungsstabes 30 ist ein Rückhalteriegel 33 befestigt, welcher an seiner Außenfläche eine Vertiefung aufweist. In dieser Vertiefung ist das Rückhaltelement 32, welches mit dem Bolzen 21 verbunden ist, angeordnet. Durch die Anordnung des Rückhaltelementes 32 in der Vertiefung des Rückhalteriegels 33 wird die Arretierung des Übertragungsstabes 30 in der zweiten Position bewirkt. Die Arretierung des Übertragungsstabes 30 in der zweiten Position ist so lange gegeben, bis der Bearbeitungskopf 5 die Stirnfläche 36 des Bolzens 31 berührt, wodurch der Bolzen 31 geringfügig in Richtung des Übertragungsstabes 30 verschoben wird. Dies hat zur Folge, dass das Rückhaltelement 32 aus der Vertiefung in der Außenfläche des Rückhalteriegels 33 bewegt wird, wodurch die Arretierung des Übertragungsstabes 30 in der zweiten Position gelöst wird. Der Bolzen 31 ist mit einer Feder 37 verbunden, deren Rückstellkraft den Bolzen 31 in eine von dem Übertragungsstab 30 wegweisende Richtung drückt. Die Feder 37 bewirkt dadurch, dass die Arretierung des Übertragungsstabes 30 in der zweiten Position nur bei Kontakt der Stirnfläche 36 des Bolzens 31 mit dem Bearbeitungskopf 5 und nicht etwa durch Erschütterungen oder andere Einflüsse gelöst wird. Darüber hinaus kehrt der Bolzen 31 durch die Rückstellkraft der Feder 37 nach Verschwenken des Bearbeitungskopfes 5 in eine größere Winkelstellung wieder in seine Ausgangsposition zurück. Wie bereits geschildert, führt eine Lösung der Arretierung des Übertragungsstabes 30 zu seiner Bewegung in die erste Position oder eine weitere Position. Durch den Abschnitt 35 ist für einen Anwender erkennbar, ob sich der Übertragungsstab 30 in der ersten, in der zweiten Position oder einer weiteren Position befindet, sodass das Erreichen einer oder mehrerer bevorzugter Winkelstellungen der Klinge 7 des Bearbeitungskopfes 5 gegenüber dem Führungselement 4, beispielsweise der 90°-Winkelstellung, für einen Anwender unmittelbar erkennbar ist. Mittels der Mutter 38 kann die Position des Bolzens 31 vor seinem Kontakt mit dem Bearbeitungskopf 5 eingestellt werden, sodass die Arretierung des Übertragungsstabes 30 in der zweiten Position auch bei anderen Winkelstellungen der Klinge 7 gelöst werden kann.

Figur 4 zeigt ebenfalls einen Längsschnitt der ersten Ausführungsform der erfindungsgemäßen Schälvorrichtung 1, wobei jedoch die Klinge 7 des Bearbeitungskopfes 5 die 90°-Winkelstellung bezüglich des Führungselementes 4 erreicht hat. Bei Erreichen der in der Figur 4 gezeigten Winkelstellung des Bearbeitungskopfes 5 wird die Arretierung des Übertragungsstabes 30 gelöst, woraufhin sich dieser durch die Rückstellkraft der Feder 34 in die erste Position bewegt.

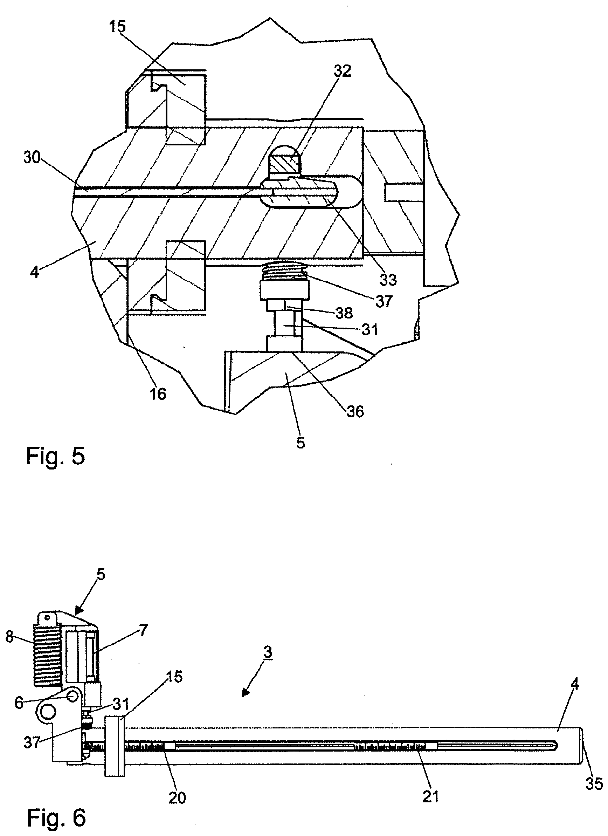

Figur 5 zeigt den in Figur 4 von einem Kreis umgebenen Ausschnitt in einer vergrößerten Darstellung. Es ist gezeigt, dass der Bearbeitungskopf 5 den Bolzen 31 durch Kontakt mit seiner Stirnfläche 36 geringfügig verschoben hat, sodass das Rückhalteelement 32 aus der Vertiefung in der Außenfläche des Rückhalteriegels 33 bewegt ist. Dadurch ist die Arretierung des Übertragungsstabes 30 in der zweiten Position gelöst, sodass sich dieser in die erste Position oder eine weitere Position bewegt. Die Bewegung des Bolzens 31 in Richtung des Übertragungsstabes 30 durch Kontakt mit dem Bearbeitungskopf 5 erfolgt gegen die Rückstellkraft der Feder 37, welche zugleich bewirkt, dass der Bolzen 31 in seine ursprüngliche Position zurückkehrt, wenn der Bearbeitungskopf 5 aus der 90°-Winkelstellung der Klinge 7 bezüglich des Führungselementes 4 in Richtung größerer Winkel verschwenkt wird. Mittels der Mutter 38 kann darüber hinaus der Abstand der Stirnfläche 36 des Bolzens 31 von dem Führungselement 4 eingestellt werden, sodass die Lösung der Arretierung des Übertragungsstabes 30 in der zweiten Position auch bei Winkeln zwischen der Klinge 7 und dem Führungselement 4 von ungleich 90 Grad erfolgen kann.

Figur 6 zeigt eine Draufsicht auf das Schälwerkzeug 3 der erfindungsgemäßen Schälvorrichtung 1. Das Schälwerkzeug 3 besteht im Wesentlichen aus einem Führungselement 4 und einem Bearbeitungskopf 5, wobei der Bearbeitungskopf 5 mit dem Führungselement 4 über ein Gelenk 6 verbunden ist. Eine Feder 8 wirkt mit ihrer Rückstellkraft gegen eine Auslenkung des Bearbeitungskopfes 5. Das Führungselement 4 weist einen Anschlag 15 auf, welcher an dem Führungselement 4 befestigbar und positionsverstellbar ausgebildet ist. Darüber hinaus weist das Führungselement 4 zwei Skalen 20, 21 auf. Mithilfe der Skala 20 kann der Anschlag 15 nach Maß an der gewünschten Position befestigt werden. Mithilfe der Skala 21 kann die Wanddicke der Rohrleitung 12 eingestellt werden, unabhängig davon, wie weit der Rohrstutzen 13 noch in die Rohrleitung 12 hineinragt. Ferner weist das Schälwerkzeug 3 eine Anzeigeeinrichtung auf, welche in einer ersten Ausführungsform aus einem in dem Führungselement 4 beweglich angeordneten Übertragungsstab 30 und einem Bolzen 31 besteht, welcher ebenfalls beweglich in dem Führungselement 4 angeordnet ist. Der Übertragungsstab 30 weist einen Abschnitt 35 auf, welcher in der ersten Position des Übertragungsstabes aus dem Führungselement herausragt. Durch Reindrücken des Abschnittes 35 wird der Übertragungsstab 30 in die zweite Position überführt, in welcher er durch den Bolzen 31 arretiert wird. Der Bolzen 31 ist mit einer Feder 37 verbunden, deren Rückstellkraft den Bolzen 31 in eine von dem Übertragungsstab 30 wegweisende Richtung drückt, und dadurch eine erschütterungsfeste Arretierung des Übertragungsstabes 30 in der zweiten Position ermöglicht. In der Figur 6 hat die Klinge 7 des Bearbeitungskopf 5 gerade die 90°-Winkelstellung bezüglich des Führungselementes 4 des Schälwerkzeuges 3 erreicht, sodass der Bearbeitungskopf 5 mit einer Stirnfläche des Bolzens 31 in Kontakt gelangt, und den Bolzen 31 in Richtung des Übertragungsstabes 30 gegen die Rückstellkraft der Feder 37 geringfügig verschiebt, wodurch die Arretierung des Übertragungsstabes 30 in der zweiten Position gelöst wird. In weiterer Folge bewegt sich der Übertragungsstab 30 in die erste Position oder eine weitere Position, wodurch der Abschnitt 35 des Übertragungsstabes 30 aus dem Führungselement 4 herausragt (nicht gezeigt). Das Herausragen des Abschnittes 35 aus dem Führungselement 4 zeigt einem Anwender das Erreichen der 90°-Winkelstellung der Klinge 7 des Bearbeitungskopfes 5 oder einer weiteren Winkelstellung bezüglich des Führungselementes 4 an, wodurch die Bedienung der erfindungsgemäßen Schälvorrichtung 1, umfassend das erfindungsgemäße Schälwerkzeug 3, ausgesprochen komfortabel ist.

### Bezugszeichenliste:

- 1: Schälvorrichtung
- 2: Zentriervorrichtung
- 3: Schälwerkzeug
- 4: Führungselement
- 5: Bearbeitungskopf
- 6: Gelenk
- 7: Klinge
- 8: Feder
- 9: Schnellspannmutter
- 10: Hebel
- 11: Hebel
- 12: Rohrleitung
- 13: Rohrstutzen
- 14: Bereich
- 15: Anschlag
- 16: Anschlagfläche
- 20: Skala
- 21: Skala
- 30: Übertragungsstab
- 31: Bolzen
- 32: Rückhalteelement
- 33: Rückhalteriegel
- 34: Feder
- 35: Abschnitt
- 36: Stirnfläche
- 37: Feder
- 38: Mutter

## Patentansprüche

1. Schälvorrichtung (1) für das Abschälen einer Stirnfläche eines in ein Rohr (12) eingesetzten Rohrstutzens (13), umfassend eine Zentriervorrichtung (2) und ein Schälwerkzeug (3), wobei das Schälwerkzeug (3) zumindest ein Führungselement (4), das sich durch die Zentriervorrichtung (2) erstreckt und beweglich von dieser aufgenommen ist, und einen Bearbeitungskopf (5) zur Abschälung der Stirnfläche aufweist,
**dadurch gekennzeichnet,**
**dass** das Führungselement (4) eine erste Skala (21) aufweist, mittels welcher die axiale Position des Schälwerkzeuges (3) bezüglich der Zentriervorrichtung (2) ablesbar ist; und/oder dass das Schälwerkzeug (3) einen Anschlag (15) und die Zentriervorrichtung (2) eine Anschlagfläche (16) aufweist, wobei der Anschlag (15) an dem Führungselement (4) befestigbar und positionsverstellbar ausgebildet ist, und wobei das Führungselement (4) des Schälwerkzeuges (3) ferner eine zweite Skala (20) aufweist, mittels welcher eine Befestigungsposition des Anschlages (15) an dem Führungselement (4) nach Maß einstellbar ist.

2. Schälvorrichtung (1) nach Anspruch 1,
**dadurch gekennzeichnet,**
**dass** der Bearbeitungskopf (5) zumindest eine Klinge (7) aufweist und/oder dass der Bearbeitungskopf (5) über ein Gelenk (6) mit dem Führungselement (4) verbunden ist und eine Feder (8) aufweist, welche den Bearbeitungskopf (5) gegen die abzuschälende Stirnfläche drückt.

3. Schälvorrichtung (1) nach Anspruch 1 oder 2,
**dadurch gekennzeichnet,**
**dass** die Schälvorrichtung (1) eine Schnellspannmutter (9), welche drehbar mit der Zentriervorrichtung (2) verbunden ist, und einen Mitnehmer aufweist, wobei der Mitnehmer eine Drehung der Schnellspannmutter (9) in eine Bewegung des Schälwerkzeuges (3) in Axialrichtung des Führungselementes (4) überführt und/oder dass an der Schnellspannmutter (9) ein oder mehrere, vorzugsweise zwei Hebel (10, 11) angeordnet sind, welche bezüglich der Axialrichtung des Führungselementes (4) eine radiale Erstreckung aufweisen.

4. Schälvorrichtung (1) nach einem der Ansprüche 1 bis 3,
**dadurch gekennzeichnet,**
**dass** das Schälwerkzeug (3) eine Anzeigeeinrichtung aufweist, die das Erreichen zumindest einer bevorzugten Winkelstellung der Klinge bezüglich des Führungselementes anzeigt und/oder dass die bevorzugte Winkelstellung der Klinge (7) die Winkelstellung ist, bei der die Klinge (7) mit dem Führungselement einen Winkel von 90 Grad einschließt.

5. Schälvorrichtung (1) nach Anspruch 4,
**dadurch gekennzeichnet,**
**dass** die Anzeigeeinrichtung einen Übertragungsstab (30), welcher in dem Führungselement (4) beweglich angeordnet ist und von einer ersten Position zumindest in eine zweite Position reversibel überführbar ist, und einen Bolzen (31), welcher in dem Führungselement (4) beweglich angeordnet ist und mit dem Übertragungsstab (30) zusammenwirkt, aufweist, wobei der Bolzen (31) den Übertragungsstab (30) zumindest in der zweiten Position arretiert, welche Arretierung durch Kontakt des Bolzens (31) mit dem Bearbeitungskopf (5) lösbar ist, und wobei der Übertragungsstab (30) mit einem ersten Rückstellelement (34) zusammenwirkt, welches den Übertragungsstab (30) nach Lösen der Arretierung in die erste Position oder eine weitere Position bewegt und der Bolzen (31) mit einem zweiten Rückstellelement (37) zusammenwirkt, welches den Bolzen (31) in einer von dem Übertragungsstab (30) wegweisenden Richtung drückt.

6. Schälvorrichtung (1) nach Anspruch 5,
**dadurch gekennzeichnet,**
**dass** das erste Rückstellelement (34) und/oder das zweite Rückstellelement (37) eine Feder ist und/oder dass an dem dem Bearbeitungskopf (5) zugewandten Ende des Übertragungsstabes (30) ein Rückhalteriegel (33) befestigt ist, der eine Vertiefung an seiner Außenfläche aufweist, in welche ein mit dem Bolzen (31) verbundenes Rückhalteelement (32) eingreift, wenn sich der Übertragungsstab (30) in der zweiten Position befindet, sodass der Übertragungsstab (30) in der zweiten Position arretierbar ist.

7. Schälvorrichtung (1) nach Anspruch 5 oder 6,
**dadurch gekennzeichnet,**
**dass** ein Abschnitt (35) des Übertragungsstabes durch eine Ausnehmung in dem Führungselement (4) zumindest in der ersten Position des Übertragungsstabes (30) aus dem Führungselement (4) herausragt, sodass der Übertragungsstab (30) mittels des Abschnittes (35) von der ersten Position in die zweite Position per Hand überführbar ist.

8. Schälwerkzeug (3) zur Abschälung einer Stirnfläche eines in ein Rohr (12) eingesetzten Rohrstutzens (13), umfassend zumindest ein Führungselement (4) und einen Bearbeitungskopf,
**dadurch gekennzeichnet,**
**dass** das Schälwerkzeug (3) mit dem Führungselement (4) in den Rohrstutzen (13) einsetzbar ist und eine Zentriereinrichtung (2) auf das Schälwerkzeug (3) aufsteckbar ist, um eine Zentrierung des Schälwerkzeuges zu erreichen, wobei das Führungselement (4) eine erste Skala (21) aufweist, mittels welcher die axiale Position des Schälwerkzeuges (3) bezüglich der Zentriervorrichtung (2) ablesbar ist; und/oder dass das Führungselement (4) einen Anschlag (15) aufweist, wobei der Anschlag (15) an dem Führungselement (4) befestigbar und positionsverstellbar ausgebildet ist, und wobei das Führungselement (4) des Schälwerkzeuges (3) ferner eine zweite Skala (20) aufweist, mittels welcher eine Befestigungsposition des Anschlages (15) an dem Führungselement (4) nach Maß einstellbar ist.

9. Schälwerkzeug (3) nach Anspruch 8,
**dadurch gekennzeichnet,**
**dass** der Bearbeitungskopf (5) zumindest eine Klinge (7) aufweist und/oder dass der Bearbeitungskopf (5) über ein Gelenk (6) mit dem Führungselement (4) verbunden ist und eine Feder (8) aufweist, welche den Bearbeitungskopf (5) gegen die abzuschälende Stirnfläche eines Rohrstutzens (13) drückt.

10. Schälwerkzeug (3) nach Anspruch 8 oder 9,
**dadurch gekennzeichnet,**
**dass** das Schälwerkzeug (3) eine Anzeigeeinrichtung aufweist, die das Erreichen zumindest einer bevorzugten Winkelstellung der Klinge (7) bezüglich des Führungselementes (4) anzeigt und/oder dass die bevorzugte Winkelstellung der Klinge (7) die Winkelstellung ist, bei der die Klinge (7) mit dem Führungselement (4) einen Winkel von 90 Grad einschließt.

11. Schälwerkzeug (3) nach Anspruch 10,
**dadurch gekennzeichnet,**
**dass** die Anzeigeeinrichtung einen Übertragungsstab (30), welcher in dem Führungselement (4) beweglich angeordnet ist und von einer ersten Position zumindest in eine zweite Position reversibel überführbar ist, und einen Bolzen (31), welcher in dem Führungselement (4) beweglich angeordnet ist und mit dem Übertragungsstab (30) zusammenwirkt, aufweist, wobei der Bolzen (31) den Übertragungsstab (30) zumindest in der zweiten Position arretiert, welche Arretierung durch Kontakt des Bolzens (31) mit dem Bearbeitungskopf (5) lösbar ist, und wobei der Übertragungsstab (30) mit einem ersten Rückstellelement (34) zusammenwirkt, welches den Übertragungsstab (30) nach Lösen der Arretierung in die erste Position oder eine weitere Position bewegt und der Bolzen (31) mit einem zweiten Rückstellelement (37) zusammenwirkt, welches den Bolzen (31) in eine von dem Übertragungsstab (30) wegweisende Richtung drückt.

12. Schälwerkzeug (3) nach Anspruch 11,
**dadurch gekennzeichnet,**
**dass** das erste Rückstellelement (34) und/oder das zweite Rückstellelement (37) eine Feder ist und/oder dass an dem dem Bearbeitungskopf (5) zugewandten Ende des Übertragungsstabes (30) ein Rückhalteriegel (33) befestigt ist, der eine Vertiefung an seiner Außenfläche aufweist, in welche ein mit dem Bolzen (31) verbundenes Rückhalteelement (32) eingreift, wenn sich der Übertragungsstab (30) in der zweiten Position befindet.

13. Schälwerkzeug (3) nach Anspruch 11 oder 12,
**dadurch gekennzeichnet,**
**dass** ein Abschnitt (35) des Übertragungsstabes (30) durch eine Ausnehmung in dem Führungselement (4) zumindest in der ersten Position des Übertragungsstabes (30) aus dem Führungselement (4) herausragt, sodass der Übertragungsstab (30) mittels des Abschnittes (35) von der ersten Position in die zweite Position per Hand überführbar ist.

14. Verfahren zur Abschälung einer Stirnfläche eines in ein Rohr (12) eingesetzten Rohrstutzens (13), wobei ein Schälwerkzeug (3) mit einem Führungselement (4) in Axialrichtung des Rohrstutzens (13) bewegt und dabei die Stirnfläche abgeschält wird,
**dadurch gekennzeichnet,**
- **dass** das Schälwerkzeug (3) mit einem Führungselement (4) in den Rohrstutzen (13) eingeführt wird,
- **dass** eine Zentriereinrichtung (2) auf das Schälwerkzeug (3) aufgesteckt wird und eine Zentrierung des Schälwerkzeuges (3) erfolgt,
- **dass** die axiale Position des Schälwerkzeuges (3) bezüglich der Zentriereinrichtung (2) an einer ersten Skala (21) des Führungselementes (4) abgelesen wird; und/oder dass ein Endpunkt der Bewegung des Schälwerkzeuges (3) durch einen Anschlag (15) vorgegeben wird, welche an den Schälwerkzeugen (3) befestigt wird und in seiner Position verstellbar ausgebildet ist, wobei mittels einer zweiten, an den Führungselementen (4) angeordnete Skala (20) eine Befestigungsposition des Anschlages (15) an den Führungselementen (4) nach Maß eingestellt wird,
- **dass** bis zur Ablesung des gewünschten Schälwertes an der ersten Skala (21) und/oder eine Abschälung bis zum Erreichen des Anschlages (15) erfolgt.

15. Verfahren nach Anspruch 14,
**dadurch gekennzeichnet,**
**dass** der Endpunkt so gewählt wird, dass die abgeschälte Stirnfläche des Rohrstutzens (13) mit der Innenfläche des Rohres (12) fluchtet.

## Claims

1. Rough-turning device (1) for peeling off a front face of a connecting pipe (13) inserted in a pipe (12), comprising a centring device (2) and a rough-turning tool (3), the rough-turning tool (3) comprising at least one guide element (4) extending through the centring device (2) and being movably received by the latter, and a machining head (5) for peeling off the front face,
**characterized in that**
the guide element (4) comprises a first scale (21) by means of which the axial position (3) of the rough-turning tool (3) with respect to the centring device (2) can be read, and/or the rough-turning tool (3) comprises a stop (15), and the centring device (2) comprises a stop face (16), wherein the stop (15) is designed such that it can be fastened to the guide element (4) and its position can be adjusted, and wherein the guide element (4) of the rough-turning tool (3) furthermore comprises a second scale (20) by means of which a fastening position of the stop (15) to the guide element (4) can be adjusted to measure.

2. Rough-turning device (1) according to claim 1,
**characterized in that**
the machining head (5) comprises at least one blade (7), and/or the machining head (5) is connected to the guide element (4) via a joint (6) and comprises a spring (8) which presses the machining head (5) against the front face to be peeled off.

3. Rough-turning device (1) according to claim 1 or 2,
**characterized in that**
the rough-turning device (1) comprises a quick acting nut (9) which is rotatably connected with the centring device (2), and a catch, the catch transferring a rotation of the quick acting nut (9) into a movement of the rough-turning tool (3) in the axial direction of the guide element (4), and/or one or a plurality of, preferably two, levers (10, 11) are arranged at the quick acting nut (9) which have a radial extension with respect to the axial direction of the guide element (4).

4. Rough-turning device (1) according to one of claims 1 to 3,
**characterized in that**
the rough-turning tool (3) comprises a display unit which indicates the reaching of at least one preferred angular position of the blade with respect to the guide element, and/or the preferred angular position of the blade (7) is the angular position at which the blade (7) includes an angle of 90 degrees with the guide element.

5. Rough-turning device (1) according to claim 4,
**characterized in that**
the display unit comprises a transfer rod (30) which is movably arranged in the guide element (4) and may be reversibly transferred from a first position at least to a second position, and a pin (31) which is movably arranged in the guide element (4) and cooperates with the transfer rod (30), the pin (31) arresting the transfer rod (30) at least in the second position, which arrest may be released by a contact of the pin (31) with the machining head (5), and wherein the transfer rod (30) cooperates with a first restoring element (34) which moves the transfer rod (30) into the first position or a further position after the arrest has been released, and the pin (31) cooperates with a second restoring element (37) which presses the pin (31) into a direction away from the transfer rod (30).

6. Rough-turning device (1) according to claim 5,
**characterized in that**
the first restoring element (34) and/or the second restoring element (37) is a spring, and/or a retention lock (33) is fixed to the end of the transfer rod (30) facing the machining head (5) and comprises an indentation at its exterior surface which is engaged by a retention element (32) connected to the pin (31) when the transfer rod (30) is in its second position, so that the transfer rod (30) can be arrested in the second position.

7. Rough-turning device (1) according to claim 5 or 6,
**characterized in that**
a section (35) of the transfer rod projects from the guide element (4), at least in the first position of the transfer rod (30), through a recess in the guide element (4), so that the transfer rod (30) may be manually transferred, by means of the section (35), from the first position to the second position.

8. Rough-turning device (3) for peeling off a front face of a connecting pipe (13) inserted in a pipe (12), comprising at least one guide element (4) and one machining head,
**characterized in that**
the rough-turning tool (3) with the guide element (4) can be inserted into the connecting pipe (13), and a centring device (2) can be placed onto the rough-turning tool (3) to achieve a centring of the rough-turning tool, wherein the guide element (4) comprises a first scale (21) by means of which the axial position of the rough-turning tool (3) with respect to the centring device (2) can be read, and/or the guide element (4) comprises a stop (15), wherein the stop (15) is designed such that it can be fastened to the guide element (4) and its position can be adjusted, and wherein the guide element (4) of the rough-turning tool (3) furthermore comprises a second scale (20) by means of which a fastening position of the stop (15) to the guide element (4) can be adjusted to measure.

9. Rough-turning tool (3) according to claim 8,
**characterized in that**
the machining head (5) comprises at least one blade (7), and/or the machining head (5) is connected to the guide element (4) via a joint (6) and comprises a spring (8) which presses the machining head (5) against the front face of a connecting pipe (13) to be peeled off.

10. Rough-turning tool (3) according to claim 8 or 9,
**characterized in that**
the rough-turning tool (3) comprises a display unit which indicates the reaching of at least one preferred angular position of the blade (7) with respect to the guide element (4), and/or the preferred angular position of the blade (7) is the angular position at which the blade (7) includes an angle of 90 degrees with the guide element (4).

11. Rough-turning tool (3) according to claim 10,
**characterized in that**
the display unit comprises a transfer rod (30) which is movably arranged in the guide element (4) and may be reversibly transferred from a first position at least to a second position, and a pin (31) which is movably arranged in the guide element (4) and cooperates with the transfer rod (30), the pin (31) arresting the transfer rod (30) at least in the second position, which arrest may be released by a contact of the pin (31) with the machining head (5), and wherein the transfer rod (30) cooperates with a first restoring element (34) which moves the transfer rod (30) into the first position or a further position after the arrest has been released, and the pin (31) cooperates with a second restoring element (37) which presses the pin (31) into a direction away from the transfer rod (30).

12. Rough-turning tool (3) according to claim 11,
**characterized in that**
the first restoring element (34) and/or the second restoring element (37) is a spring, and/or a retention lock (33) is fixed to the end of the transfer rod (30) facing the machining head (5) and comprises an indentation at its exterior surface which is engaged by a retention element (32) connected to the pin (31) when the transfer rod (30) is in its second position.

13. Rough-turning tool (3) according to claim 11 or 12,
**characterized in that**
a section (35) of the transfer rod (30) projects from the guide element (4), at least in the first position of the transfer rod (30), through a recess in the guide element (4), so that the transfer rod (30) may be manually transferred, by means of the section (35), from the first position to the second position.

14. Method of peeling off a front face of a connecting pipe (13) inserted in a pipe (12), wherein a rough-turning tool (3) with a guide element (4) is moved in the axial direction of the connecting pipe (13) and the front face is peeled off in the process,
**characterized in that**
- the rough-turning tool (3) is inserted with a guide element (4) into the connecting pipe (13),
- a centring device (2) is placed onto the rough-turning tool (3) and a centring of the rough-turning tool (3) is effected,
- the axial position (3) of the rough-turning tool (3) with respect to the centring device (2) is read at a first scale (21) of the guide element (4),
and/or
- an end point of the movement of the rough-turning tool (3) is predetermined by a stop (15) which is fixed to the rough-turning tools (3) and whose position is adjustable, wherein by means of a second scale (20) arranged at the guide elements (4), a fastening position of the stop (15) at the guide elements (4) is adjusted to measure,
- a peeling off is effected until the desired peeling value is read at the first scale (21) and/or until the stop (15) is reached.

15. Method according to claim 14,
**characterized in that**
the end point is selected such that the peeled-off front face of the connecting pipe (13) flushes with the inner surface of the pipe (12).

## Revendications

1. Dispositif racleur (1) pour le raclage d'une surface frontale d'un raccord tubulaire (13) inséré dans un tube (12), comprenant un moyen de centrage (2) et un outil racleur (3), l'outil racleur (3) présentant au moins un élément de guidage (4), qui s'étend à travers le moyen de centrage (2) et est reçu de manière mobile par celui-ci, et une tête d'usinage (5) pour racler la surface frontale,
**caractérisé en ce**
**que** l'élément de guidage (4) présente un premier cadran (21), qui permet de lire la position axiale de l'outil racleur (3) par rapport au moyen de centrage (2) ; et/ou **en ce que** l'outil racleur (3) présente une butée (15) et le moyen de centrage (2) présente une surface de butée (16), la butée (15) pouvant être fixée à l'élément de guidage (4) et étant configurée réglable en position, et l'élément de guidage (4) de l'outil racleur (3) présentant en outre un second cadran (20), qui permet de régler une position de fixation de la butée (15) à l'échelle sur l'élément de guidage (4).

2. Dispositif racleur (1) selon la revendication 1,
**caractérisé en ce**
**que** la tête d'usinage (5) présente au moins une lame (7) et/ou **en ce que** la tête d'usinage (5) est reliée à l'élément de guidage (4) par le biais d'une articulation (6) et présente un ressort (8) qui presse la tête d'usinage (5) contre la surface frontale à racler.

3. Dispositif racleur (1) selon la revendication 1 ou 2,
**caractérisé en ce**
**que** le dispositif racleur (1) présente un écrou à serrage rapide (9), qui est relié de manière rotative au moyen de centrage (2), et présente un élément d'entraînement, l'élément d'entraînement transmettant une rotation de l'écrou à serrage rapide (9) dans un mouvement de l'outil racleur (3) dans la direction axiale de l'élément de guidage (4) et/ou **en ce que**, sur l'écrou à serrage rapide (9), un ou plusieurs, de préférence deux, leviers (10, 11) sont disposés, qui présentent une extension radiale par rapport à la direction axiale de l'élément de guidage (4).

4. Dispositif racleur (1) selon une des revendications 1 à 3,
**caractérisé en ce**
**que** l'outil racleur (3) présente un moyen d'affichage, qui affiche l'atteinte d'au moins une position angulaire préférée de la lame par rapport à l'élément de guidage et/ou **en ce que** la position angulaire préférée de la lame (7) est la position angulaire dans laquelle la lame (7) forme un angle de 90 degrés avec l'élément de guidage.

5. Dispositif racleur (1) selon la revendication 4,
**caractérisé en ce**
**que** le moyen d'affichage présente une barre de transfert (30), qui est disposée mobile dans l'élément de guidage (4) et peut être transférée de manière réversible d'une première position au moins dans une deuxième position, et un boulon (31), qui est disposé mobile dans l'élément de guidage (4) et coopère avec la barre de transfert (30), le boulon (31) bloquant la barre de transfert (30) au moins dans la deuxième position, ledit blocage pouvant être enlevé lors du contact du boulon (31) avec la tête d'usinage (5), et la barre de transfert (30) coopérant avec un premier élément de rappel (34) qui déplace la barre de transfert (30), après enlèvement du blocage, dans la première position ou une autre position et le boulon (31) coopérant avec un deuxième élément de rappel (37), qui presse le boulon (31) dans une direction détournée de la barre de transfert (30).

6. Dispositif racleur (1) selon la revendication 5,
**caractérisé en ce**
**que** le premier élément de rappel (34) et/ou le deuxième élément de rappel (37) est un ressort et/ou **en ce que**, sur l'extrémité de la barre de transfert (30) orientée vers la tête d'usage (5), un verrou de maintien (33) est fixé et présente un renfoncement sur sa surface extérieure, dans lequel un élément de retenue (32) relié au boulon (31) s'engage lorsque la barre de transfert (30) se trouve dans la deuxième position, de telle sorte que la barre de transfert (30) peut être bloquée dans la deuxième position.

7. Dispositif racleur (1) selon la revendication 5 ou 6,
**caractérisé en ce**
**qu'**un segment (35) de la barre de transfert dépasse de l'élément de guidage (4) à travers un évidement dans l'élément de guidage (4) au moins dans la première position de la barre de transfert (30), de telle sorte que la barre de transfert (30) peut être transférée à la main de la première position dans la deuxième position à l'aide du segment (35).

8. Outil racleur (3) pour racler une surface frontale d'un raccord tubulaire (13) inséré dans un tube (12), comprenant au moins un élément de guidage (4) et une tête d'usinage,
**caractérisé en ce**
**que** l'outil racleur (3) peut être inséré avec l'élément de guidage (4) dans le raccord tubulaire (13) un moyen de centrage (2) peut être appliqué sur l'outil racleur (3) pour obtenir un centrage de l'outil racleur, l'élément de guidage (4) présentant un premier cadran (21), qui permet de lire la position axiale de l'outil racleur (3) par rapport au moyen de centrage (2) ; et/ou **en ce que** l'élément de guidage (4) présente une butée (15), la butée (15) pouvant être fixée à l'élément de guidage (4) et étant configurée réglable en position, et l'élément de guidage (4) de l'outil racleur (3) présentant en outre un second cadran (20), qui permet de régler une position de fixation de la butée (15) à l'échelle sur l'élément de guidage (4).

9. Outil racleur (3) selon la revendication 8,
**caractérisé en ce**
**que** la tête d'usinage (5) présente au moins une lame (7) et/ou **en ce que** la tête d'usinage (8) est reliée à l'élément de guidage (4) par le biais d'une articulation (6) et présente un ressort (8) qui presse la tête d'usinage (5) contre la surface frontale à racler d'un raccord tubulaire (13).

10. Outil racleur (3) selon la revendication 8 ou 9,
**caractérisé en ce**
**que** l'outil racleur (3) présente un moyen d'affichage, qui affiche l'atteinte d'au moins une position angulaire préférée de la lame (7) par rapport à l'élément de guidage (4) et/ou **en ce que** la position angulaire préférée de la lame (7) est la position angulaire dans laquelle la lame (7) forme un angle de 90 degrés avec l'élément de guidage (4).

11. Outil racleur (3) selon la revendication 10,
**caractérisé en ce**
**que** le moyen d'affichage présente une barre de transfert (80), qui est disposée mobile dans l'élément de guidage (4) et peut être transférée de manière réversible d'une première position au moins dans une deuxième position, et un boulon (31), qui est disposé mobile dans l'élément de guidage (4) et coopère avec la barre de transfert (30), le boulon (31) bloquant la barre de transfert (30) au moins dans la deuxième position, ledit blocage pouvant être enlevé lors du contact du boulon (31) avec la tête d'usinage (5), et la barre de transfert (30) coopérant avec un premier élément de rappel (34), qui déplace la barre de transfert (30), après enlèvement du blocage, dans la première position ou une autre position et le boulon (31) coopérant avec un deuxième élément de rappel (37), qui presse le boulon (31) dans une direction détournée de la barre de transfert (30).

12. Outil racleur (3) selon la revendication 11,
**caractérisé en ce**
**que** le premier élément de rappel (34) et/ou le deuxième élément de rappel (37) est un ressort et/ou **en ce que**, sur l'extrémité de la barre de transfert (30) orientée vers la tête d'usage (5), un verrou de maintien (33) est fixé et présente un renfoncement sur sa surface extérieure, dans lequel un élément de retenue (32) relié au boulon (31) s'engage, lorsque la barre de transfert (30) se trouve dans la deuxième position.

13. Outil racleur (3) selon la revendication 11 ou 12,
**caractérisé en ce**
**qu'**un segment (35) de la barre de transfert (30) dépasse de l'élément de guidage (4) à travers un évidement dans l'élément de guidage (4) au moins dans la première position de la barre de transfert (30) de telle sorte que la barre de transfert (30) peut être transférée à la main de la première position dans la deuxième position à l'aide du segment (35).

14. Procédé de raclage d'une surface frontale d'un raccord tubulaire (13) inséré dans un tube (12), dans lequel un outil racleur (3) est déplacé avec un élément de guidage (4) dans la direction axiale du raccord tubulaire (13) et la surface frontale est ainsi raclée,
**caractérisé en ce**
- **que** l'outil racleur (3) est introduit dans le raccord tubulaire (13) avec un élément de guidage (4),
- **qu'**un moyen de centrage (2) est appliqué sur l'outil racleur (3) et un centrage de l'outil racleur (3) est effectué,
- **que** la position axiale de l'outil racleur (3) par rapport au moyen de centrage (2) est lue sur un premier cadran (21) de l'élément de guidage (4) ;
et/ou
- **qu'**une fin de course du déplacement de l'outil racleur (3) est prédéfinie par une butée (15) qui est fixée à l'outil racleur (3) et est configurée réglable dans sa position, dans lequel à l'aide d'un second cadran (20) disposé sur les éléments de guidage (4) une position de fixation de la butée (15) est réglée à l'échelle sur les éléments de guidage (4),
- **qu'**un raclage est effectué jusqu'à la lecture de la valeur de raclage souhaitée sur le premier cadran (21) et/ou jusqu'à ce que la butée (15) soit atteinte.

15. Procédé selon la revendication 14,
**caractérisé en ce**
**que** la fin de course est choisie de telle sorte que la surface frontale raclée du raccord tubulaire (13) soit alignée avec la surface intérieure du tube (12).
